# EUROPEAN PATENT SPECIFICATION

(11) **EP 1 682 585 B1**
(45) Date of publication and mention of the grant of the patent: **21.10.2009**
(21) Application number: 04790873.6
(22) Date of filing: 21.10.2004
(51) Int. Cl.: C08B 30/12, C08B 37/00, A23L 1/09, A23L 1/0522

(54) **USE OF LINEAR POLY-ALPHA-1,4-GLUCANS AS RESISTANT STARCH**
VERWENDUNG VON LINEAREN POLY-ALPHA-1,4-GLUCANEN ALS RESISTENTE STÄRKE
UTILISATION DE POLY-ALPHA-1,4-GLUCANS LINEAIRES COMME AMIDON RESISTANT

(30) Priority: 24.10.2003 EP 03090366
(43) Date of publication of application: 26.07.2006
(73) Proprietor: Bayer CropScience AG, 40789 Monheim (DE)
(72) Inventor: FROHBERG, Claus, 14532 Kleinmachnow (DE); QUANZ, Martin, 10997 Berlin (DE)
(74) Representative: Beyer, Andreas
(86) International application number: PCT/EP2004/012090
(87) International publication number: WO 2005/040223

(56) References cited:
- DE-A- 19 860 375
- US-A1- 2003 004 332
- US-A1- 2003 094 172

## Description

The present invention concerns the use of linear alpha-1,4-glucans as resistant starch (RS) as well as a method for the preparation of resistant starch.

Fundamentally alpha-amylase resistant starch structures are known as "resistant starch" (RS). RSs are not degraded by alpha-amylases. Owing to their reduced metabolic susceptibility resistant starches represent a reduced energy, bulk-producing component in the sense of a ballast in foodstuffs or foodstuff compositions.

The use of resistant starch (RS) is becoming increasingly important in the foodstuffs industry. The body obtains energy to only a small extent from the degradation of products containing RS. This energy supply affects solely the oxidative degradation of short-chain fatty acids resorbed from the colon. These short-chain fatty acids are the end products of carbohydrate metabolism of the intestinal microflora. With the consumption of foodstuffs containing RS, substrates for the energy metabolism of the intestinal microflora and the colonic epithelial cells are made available. The latter are dependent upon the luminal supply of short-chain fatty acids, especially butyrate, for the maintenance of their structure and function.

High luminal butyrate levels in the colon represent a protective factor against colorectal diseases.

Resistant starch is divided into the following types:
- RS type 1: Starch not accessible physically to digestion, for example partly milled plant cells (e.g. in muesli).
- RS type 2: Indigestible granular starch (starch grains), for example from raw potatoes, green bananas, etc.
- RS type 3: Indigestible retrograded starch that is obtained, for example, by thermal and/or enzymatic treatment and then retrograded.
- RS type 4: Indigestible, chemically modified starch that is formed, for example, by cross-bonding or esterification (acetylation, etc).

Characteristic of RS type 3 is that it is a resistant starch that is formed by retrogradation. During the retrogradation (also: recrystallisation) of gelatinised starches microcrystalline structures are formed which are not susceptible to enzymatic hydrolysis by alpha-amylases.

It is known from US 3,729,380 that the fraction of highly-branched amylopectin can be reduced by enzymatic treatment with debranching enzymes and a such debranched starch possesses a higher tendency to retrogradation than native starch.

EP-A1-0 564 893 describes a method for the preparation of an RS-containing product in which an approximately 15% aqueous suspension of a starch which consists of a minimum of 40% amylose is gelatinised, treated with a debranching enzyme, and the resulting intermediate produced is then retrograded. The product contains at least 15% RS. If in this method a starch with an amylose fraction of 100% is used the product contains about 50% RS.

EP-A1-0 688 872 describes a method for the preparation of a 25 to 50% RS-containing product from a ca. 20% aqueous suspension of a so-called "partially degraded", gelatinised starch or maltodextrin that is enzymatically debranched and retrograded. A starch with an amylose fraction of less than 40 % is used as starting material in the method.

In EP-A1-0 688 872 a starch defined as "partially degraded" is a starch that is reduced in its molecular weight by suitable physical or chemical treatment, whereby the shortening of the chain length affects both amylose and amylopectin. The shortening of the chain length can be carried out both by hydrolytic methods (acid or enzymatically catalysed), and by extrusion, oxidation or pyrolysis. The product obtained by retrogradation of the degraded product is dried by spray drying. The powdered product contains an RS fraction of more than 50% RS.

A retrograded starch is described in EP-A-0846704 that has an RS content of more than 55% and a DSC melting temperature of below 1 15 °C.

The international patent application WO 00/02926-A1 describes a method for the preparation of alpha-amylase resistant polysaccharides wherein water-insoluble poly-alpha-1,4-glucanes are suspended or dispersed in water, the suspension or dispersion obtained is warmed, the paste thus obtained is cooled and the paste is retrograded at a temperature that is lower than the temperature of the heated paste. In this way RS products are obtained with an RS content of more than 65%.

Schmiedl et al. (Carbohydrate Polymers 43, (2000), 183-193) describe further the butyrogenic action of resistant starches of type 3 (called "resistant starch type III in the publication of Schmiedl et al.) that were prepared from alpha-1,4-glucanes.

The disclosure of the international patent application WO 00/38537-A1 builds on WO 00/02926-A1. WO 00/38537-A1 describes compositions that contain inter alia a resistant starch that is produced as described by the disclosure in WO 00/02926-A1. WO 00/38537-A1 describes that the formation of the resistant starch used in the compositions is carried out by retrogradation of the "non-resistant" water-insoluble linear alpha-1,4-D-glucanes and that the "non-resistant" water-insoluble linear poly-alpha-1,4-D-glucanes produce resistant starches only after retrogradation.

In summary it can be seen that state of the art for the preparation of non-granular, non-chemically modified resistant starches teaches that resistant starch structures are formed when the polysaccharides are subjected to an additional retrogradation process which is usually time consuming and cost intensive.

US 2003094172 (A1) and WO 01/42309 relate to a process for increasing the content of alpha-amylase-resistant starch (RS content) of a polysaccharide wherein the polysaccharide used is, under a water deficit, incubated, then cooled, if appropriate dried and a polysaccharide having an RS content increased compared with the polysaccharide used is obtained. The resistant starch content of the not retrograded starting material is 57,3 - 65%.

The task of the present invention is to make available in cost-effective ways polysaccharides that can be used as resistant starches.

This task is solved by the provision of the embodiments described in the patent claims.

Thus the present invention concerns the use of water-insoluble linear poly-alpha-1,4-D-glucans as resistant starch (RS), characterized in that
the poly-alpha-1,4-D-glucans are not retrograded, and exhibit an RS content determined by the method of Englyst et al. of more than 70 wt.%,
wherein the water-insoluble linear poly-alpha-1,4-D-glucans are obtainable by the reaction of an aqueous saccharose solution with a crude protein extract of E. coli bacterial strain KV832 that expresses a nucleic acid sequence that codes for an amylosucrase from Neisseria polysaccharea.

It was surprisingly found that water-insoluble linear alpha-1,4-D-glucanes as characterized above can also be used as resistant starches without one or more additional retrogradation steps.

The international patent application WO-00/38537-A1 teaches that a resistant starch obtainable from a water-insoluble linear poly-alpha-1,4-glucan can only be obtained through retrogradation of the "non-resistant" water-insoluble linear alpha-1,4-D-glucans.

The present invention makes available in a cost effective manner resistant starches whose preparation needs no time and cost intensive retrogradation step. The omission of the retrogradation step represents a significant advantage opposite the method for the preparation of resistant starches described in WO 00/02926-A1 in which owing to their water insolubility the poly-alpha-1,4-glucans must first be solubilised by high temperatures and/or elevated pressure before they can be made to undergo subsequent retrogradation. The use of elevated temperatures and/or pressures is very energy, and thus cost, intensive.

In connection with the present invention the term "resistant starch" or "RS" is understood to be a polysaccharide that consists of water-insoluble linear poly-alpha-1,4-glucans and is not susceptible to degradation by alpha-amylases. The "resistant starch" to be used in accordance with the invention is neither a granular starch of RS type 2), nor a retrograded (RS type 3) nor chemically modified starch (RS type 4) and thus represents a new type of resistant starch that consequently will be referred to hereinafter as RS type 5.

In a further embodiment of the use according to the invention the water-insoluble linear poly-alpha-1,4-D-glucans are prepared enzymatically.

In connection with the present invention the term "water-insoluble" is understood to be linear poly-alpha-1,4-D-glucans which according to the definition of the Deutsches Arzneimittelbuch (Wissenschaftliche Verlagsgesellschaft mbH, Stuttgart, Gori-Verlag GmbH, Frankfurt, 9. Edition (1987) fall within the categories of "less soluble", poorly soluble", "very poorly soluble" and "practically insoluble" in respect of classes 4-7.

The water insolubility of the poly-alpha-1,4-D-glucans used according to the invention is preferably such that at least 98%, in particular at least 99.5% of the polysaccharides used are insoluble in water under normal conditions (temperature = 25 °C +/- 20%'; pressure = 101325 Pascal +/-20%) (corresponding at least to classes 4 and 5 of the definition of the Deutsches Arzneimittelbuch).

Methods for the determination of the solubility of the of the poly-alpha-1,4-D-glucans are known to the person skilled in the art.

In connection with the present invention the term "linear" is understood to be poly-alpha-1,4-D-glucans that exhibit no branching or whose branching is so minimal that it is not detectable with normal methods such as ¹³C NMR spectroscopy.

In connection with the present invention an "aqueous saccharose solution" is understood to be an aqueous solution which can be free of buffer salts but preferably contains buffer salts, with a saccharose concentration in a range lying between 0.5 wt.% to 80 wt.%, preferably in a range between 5 wt.% - 60 wt.%, further preferred in a range between 10 wt.% - 50 wt.%, especially preferred in a range between 20 wt.% - 30 wt.%.

In connection with the present invention an "enzyme with the activity of an amylosucrase" is understood to be an enzyme that catalyses the following reactions:
1. Saccharrose + saccharose ↔ oligo-(alpha-1,4-glucan)ₙ + fructose
2. Oligo-(alpha-1,4-glucan)ₙ + saccharose ↔ poly-(alpha-1,4-glucan)ₙ₊₁ + fructose

Starting from this reaction scheme linear oligomeric or polymeric alpha-1,4-glucans can serve as acceptors for a chain-lengthening reaction that leads to water-insoluble linear poly-alpha-1,4-D-glucans to be used according to the invention whose glucose residues are connected by alpha-1,4-glycosidic bonds and exhibit a mean molecular weight in the range of 0.75 x 10² g/mol to 10⁷ g/mol, preferably from 1 x 10² g/mol to 10⁵ g/mol, and more preferably from 1 x 10³ g/mol to 3 x 10⁴ g/mol, most preferably from 2 x 10³ g/mol to 1.2 x 10⁴ g/mol.

These linear oligomeric or polymeric alpha-1,4-glucan acceptors can be added externally, however, they are preferably produced from saccharose by amylosucrase itself as described in example 1.

Branching, for example alpha-1,6-glycosidic bonds, are not detectable by ¹³C NMR (Remaud-Simeon et al. in "Carbohydrate Bioengineering" (ed. S. B. Petersen et al.), Elsevier Science B.V. (1995), 313-320) in these products that were obtained by the reaction of an aqueous saccharose solution with an enzyme with the enzymatic activity of an amylosucrase.

In connection with the present invention any optional amylosucrase can be used in principle. Proteins with the enzymatic activity of an amylosucrase are known to the person skilled in the art. Preferably the amylosucrases to be used according to the invention originate from micro-organisms, preferably from bacteria of the genus Neisseria, more preferably the amylosucrase from Neisseria polysaccharea.

The US patent US 6265635-B1, the international patent application WO 00/14249-A1 and Potocki de Montalk et al. (Journal of Bacteriology 181 (2), (1999), 375-381) describe, for example, DNA sequences that code an amylosucrase protein from Neisseria polysaccharea that is preferred in connection with the present invention. Further, the presence of proteins with amylosucrase activity have been described for a series of further Neisseria species, for example for Neisseria perflava (Okada and Hehre, J. Biol. Chem. 249 (1974), 126-135), MacKenzie et al., Can J. Microbiol. 23, (1977), 1303-1307), Neisseria canis, Neisseria cinerea, Neisseria denitrificans, Neisseria sicca, Neisseria subflava (MacKenzie et al., Can. J. Microbiol. 24, (1978), 357-362).

A DNA sequence coding for an amylosucrase protein from Caulobacter crescentus CB 15 is described in Complete genome sequence of Caulobacter crescentus. (2001) Proc. Natl. Acad. Sci. U.S.A. 98:4136-4141, the DNA and protein sequence information is available in the EMBL data bank (http://srs.ebi.ac.uk) under ID no. AE005791 and Protein_id AAK23119.1.

An amylosucrase is also known from Neisseria meningitidis strain 93246 whose DNA and amino acid sequence is accessible under ID AY099334 and Protein_id AAM51152.1 of the EMBL data bank.

Further, a DNA sequence from Deinococcus radiodurans R1 is known (NCBI gene bank accession number NP_294657, known there as alpha-amylase) which codes for a protein with the enzymatic activity of an amylosucrase.

With the help of this DNA and amino acid sequence information of the amylosucrases, preferably with the help of the sequence information described in WO 00/14249-A1 it is now possible for the person skilled in the art to isolate homologous sequences from other organisms, preferably micro-organisms. This can be carried out, for example, with the help of conventional methods, for example by screening genomic banks with suitable hybridisation probes. It is known to the person skilled in the art that the isolation of homologous sequences can also be carried out with the help of (degenerate) oligonucleotides and with the use of PCR-based methods.

The screening of data banks such as are made available, for example, by EMBL (http://www.ebi.ac.uk/Tools/index/htm) or NCBI (National Center for Biotechnology Information, http://www.ncbi.nlm.nih.gov/), can also serve to identify homologous sequences which code for a protein with the enzymatic activity of an amylosucrase. Here one or more sequences are preset as so-called query. This query sequence is then compared with sequences that are contained in the selected data banks by means of statistical computer programmes. Such data bank interrogations (e.g. blast or fasta searches) are known to the person skilled in the art and can be carried out with different providers.
If such a data bank interrogation is carried at, for example, NCBI (National Center for Biotechnology Information, http://www.ncbi.nlm.nih.gov/) the standard settings that are preset for the respective comparison query should be used.
These are the settings for protein sequence comparisons (blastp): limit entrez = not activated; filter = low complexity activated; expect value = 10; word size = 3; matrix = BLOSUM62; gap costs: existence = 11, extension = 1.
The following parameters are for nucleic acid sequence comparisons (blastn): limit entrez: not activated; filter = low complexity activated; expect value = 10; word size = 11.
In such a data bank search the DNA and amino acid sequence information of the amylosucrases, the sequence information described in WO 00/14249-A1 can be used for example as query in order to identify further nucleic acid molecules and/or proteins that code a protein with the enzymatic activity of an amylosucrase.

The enzymatic activity of a protein with amylosucrase activity can be detected very simply by expression of the amylosucrase gene in E. coli and subsequent blue colouration of the E. coli cells with iodine as described, for example, in example 6 of the international patent application WO 95/31553-A1.

The conversion of the aqueous saccharose solution is carried out *in vitro.*

The international applications WO 99/67412-A1 (example 3) (corresponding to US application US 20020052029-A1), WO 00/38537-A1 (example 1) and de Montalk et al. (FEBS letters 471, (2000), 219-223) disclose for example methods for the *in vitro* preparation of poly-alpha-1,4-D-glucans by means of amylosucrase. Explicit reference is made here to the disclosure of these documents. Further, in example 1 of the present patent application an *in vitro* method for the preparation of poly-alpha-1,4-D-glucanes is described.

In a further embodiment of the present invention the *in vitro* preparation of poly-alpha-1,4-D-glucans with amylosucrase takes place in the presence of external linear glucosyl group acceptors. Within the context of the present invention the term "external linear glucosyl group acceptor" is understood to be a linear oligo- or polysaccharide, for example maltopentaose, maltohexaose, maltoheptaose, that is added externally to the *in vitro* system and is in the position to increase the initial rate of conversion of the saccharose by the amylosucrase.

In a further particularly preferred embodiment of the present invention the *in vitro* preparation of poly-alpha-1,4-D-glucans by means of amylosucrase takes place in the absence of external branched glucosyl group acceptors. Within the context of the present invention the term "external branched glucosyl group acceptor" is understood to be a branched carbohydrate molecule such as glycogen or amylopectin that is added to the *in vitro* system either externally or is already present in the reaction mixture, for example as component of the amylosucrase enzyme extract and that is in the position to increase the initial rate of conversion of the saccharose by the amylosucrase.

Water-insoluble linear poly-alpha-1,4-D-glucans that exhibit the properties described here (insoluble in water, no branching, molecular weight between 10² g/mol and 10⁷ g/mol) but prepared by a different method can also be starting materials of the use according to the invention.

The water-insoluble linear poly-alpha-1,4-D-glucans exhibit an RS content determined according to the method of Englyst et al. (European Journal of Clinical Nutrition 46, (Supp.23), (1992), S33-S50) of more than 70 wt.%. In connection with the present invention the method of Englyst et al. preferably used to determine the RS content is described in example 1.

In a further embodiment of the present invention the water-insoluble linear poly-alpha-1,4-D-glucans to be used according to the invention exhibit an RS content determined by the method of Englyst et al. of more than 75 wt.%, preferably more then 80 wt.%, more preferably more than 85 wt.%.

The poly-alpha-1,4-D-glucans to be used according to the invention exhibit high RS contents. That is fully surprising for the person skilled in the art since on the basis of the disclosure content of WO 00/38537-A1 he would have to assume that the poly-alpha-1,4-D-glucans to be used according to the invention would form "non-resistant" structures, that is, structures that would be susceptible to degradation by alpha-amylases.

It was now surprisingly found that contrary to the disclosure of WO 00/38537-A1 the poly-alpha-1,4-D-glucans to be used according to claim 1 of the invention already exhibit RS contents of more than 70 wt.%, preferably more than 80 wt.%, more preferably more than 85 wt.% without them being subjected to an additional retrogradation step.

In connection with the present invention "retrogradation" (also: recrystallisation) is understood to mean a process that consists of at least one heating step and at least one cooling step of a polysaccharide suspension or polysaccharide dispersion. During the heating step the polysaccharide suspension or polysaccharide dispersion gelatinises, during the cooling phase microcrystalline structures are formed that are not susceptible to enzymatic hydrolysis by alpha-amylases.

Further it was found that the poly-alpha-1,4-D-glucans to be used according to the invention promote the formation of short-chain fatty acids, particularly butyrate, in the colon and are thus suitable for use as nutritional supplements for the prevention of colorectal diseases.

In a further embodiment of the use according to the invention the water-insoluble linear poly-alpha-1,4-D-glucans exhibit a DSC peak temperature of between 95 °C and 125 °, preferably between 100 °C and 120 °C, more preferably between 105 °C and 116 °C.

The method of "Differential Scanning Calorimetry" (DSC) is known to the person skilled in the art. Results of DSC measurements are used for the characterisation of the thermal stability of the RS products. The DSC method preferably used in connection with the present invention is described in example 3 of the present patent application.

The endothermic peaks of the DSC measurement are more closely characterised by various parameters (Tₒ, Tₚ, T_{c} and dH). The onset temperature To characterises the start of the thermal transformation. At the value for Tₚ (Tₚ = DSC peak temperature) the temperature at which the maximum thermal transformation of the crystalline material takes place is read off, whereas T_{c} represent the temperature at which the transformation process is concluded (end temperature.)

The energy of transformation dH (enthalpy of transformation) is determined by calculation of the peak area. It represents the total energy that is necessary for the transformation.

In a further embodiment of the use according to the invention the water-insoluble linear poly-alpha-1,4-D-glucans exhibit a DSC energy of phase transformation dH of 10 J/g - 30 J/g, preferably of 11 J/g - 25 J/g and more preferably of 20 J/g - 24 J/g.

In a further preferred embodiment of the use according to the invention the water-insoluble linear poly-alpha-1,4-D-glucans are not modified.

In connection with the present invention the term "not modified" means that the poly-alpha-1,4-D-glucans to be used according to the invention are produced enzymatically, preferably by conversion of an aqueous saccharose solution by an amylosucrase, and after the enzymatic preparation and isolation of the poly-alpha-1,4-D-glucans are not subsequently chemically and/or physically modified.

This procedure offers the advantage that cost and time intensive retrogradation steps are omitted unlike the methods for the preparation of resistant starches, in particular RS type 3, described in the state of the art.

In a further embodiment the invention concerns the use of slightly branched water-insoluble poly-alpha-1,4-D-glucans as resistant starch.

In connection with the present invention the term "slightly branched" is understood to be a degree of branching of less than 1 %, preferably of less than 0.5% and more preferably of less than 0.25%.

The determination of the degree of branching is carried out by means of ¹³C NMR spectroscopy.

The branching can occur in positions 2 and 3, preferably in position 6. It can arise by chemical modification, for example by ether formation or esterification or through enzymatic modification, for example with a branching enzyme.

The slightly branched water-insoluble poly-alpha-1,4-D-glucans are preferably not modified.

In a further embodiment the present invention concerns a method for the preparation of resistant starch encompassing the following process steps:
a) preparation of an aqueous saccharose solution;
b) conversion of the aqueous saccharose solution with a crude protein extract of E. coli bacterial strain KV832 that expresses a nucleic acid sequence that codes for an amylosucrase from Neisseria polysaccharea into water-insoluble linear poly-alpha-1,4-D glucans; and optionally
c) isolation of water-insoluble linear poly-alpha-1,4-D-glucans.

The preparation of an aqueous saccharose solution is known to the person skilled in the art. Suitable aqueous saccharose solutions have already been described in connection with the use according to the invention.
The conversion according to process step b) has also already been described above in connection with the use according to the invention.
Methods are also known to the person skilled in the art how he can isolate the water-insoluble linear poly-alpha-1,4-D-glucans that are resistant starches RS type 5. The properties of the water-insoluble linear poly-alpha-1,4-D-glucans to be used according to the invention have already been described above in connection with the use according to the invention.

In a further embodiment of the present invention the water-insoluble linear poly-alpha-1,4-D-glucans can be dried after isolation. They can be for example freeze dried, air dried or spray dried.

In a further embodiment the present invention concerns the use of the method of the invention for the preparation of resistant starch.

The following examples serve to illustrate the invention more closely without it being limited to the examples.

### General methods

1. Preparation of water-insoluble linear poly-alpha-1,4-D-glucans. The preparation of water-insoluble linear poly-alpha-1,4-D-glucans is described for example in WO 00 44492, WO 00 02926, WO 00 38537, WO 99 67412 or WO 01 42309.
2. Purification of amylosucrase
   A protocol for the purification of a protein with the enzymatic activity of an amylosucrase is described in WO 99 67412.
3. Expression of a protein with the enzymatic activity of an amylosucrase
   The expression of a protein with the enzymatic activity of an amylosucrase in bacterial cells is described i.a. by Potocki de Montalk et al. (2000, FEMS Microbiology Letters 186, 103-10) and Potocki de Montalk et al. (1999, J. of Bacteriology 181, 375-381).

### Example 1

### Determination of the RS content of water-insoluble linear poly-alpha-1,4-D-glucans

The RS content of water-insoluble linear poly-alpha-1,4-D-glucans, prepared by the conversion of saccharose by a protein with the enzymatic activity of an amylosucrase, was based upon the method of Englyst (European Journal of Clinical Nutrition (1992) 46 (suppl.2), p.33-50) for the determination of resistant starches Type III. At the same time the method of Englyst was modified in correspondence with the information on the determination of RS content in WO 00 02926.

### a) Pancreatine/amyloglucosidase (AGS) treatment

Pancreatine/amyloglucosidase digestion buffer used:
0.1 M Na acetate pH 5.2
4 mM CaCl₂

### Preparation of the enzyme solution:

12g pancreatine (Merck, Product no. 1.07130.1000) were stirred in 80 ml demineralised water (conductivity ca. 18 M ohm) for 10 min at 37 °C and then centrifuged for 10 min at 3000 rpm.

54 ml of the supernatant obtained after centrifugation were treated with 9.86 ml demineralised water and 0.14 ml amyloglucosidase (6000 u/ml, Sigma, Product no. A-3042).

### Pancreatine/amyloglucosidase (AGS) digestion procedure

5 assays of the pancreatine/amyloglucosidae (AGS) digestion are prepared each time for each batch of water-insoluble linear poly-alpha-1,4-D-glucan to be measured. No enzyme solution is later added to 2 of each of these 5 assays. The assays to which no enzyme solution is added are designated as reference and are used for determination of the recovery rate. The remaining 3 assays are designated as sample, later treated with enzyme solution and used for the determination of the RS content of the respective water-insoluble linear poly-alpha-1,4-D-glucans.
A number of reaction vessels which contain no water-insoluble linear poly-alpha-1,4-D-glucans were processed in parallel (blank samples). These blank samples which contain no linear water-insoluble poly-alpha-1,4-D-glucan are used for the determination amount of co-precipitated material (protein, salts).

The tare weight of 50 ml reaction vessels (Falcon tubes) was determined and then in each case ca. 200 mg of the water-insoluble linear poly-alpha-1,4-D-glucan are weighed in.

15 ml Na acetate buffer was added to each of the linear water-insoluble poly-alpha-1,4-D-glucan samples and the blanks samples, and 20 ml Na acetate buffer to each of the references (see above). These samples were pre-warmed to 37 °C.

The reaction was initiated by the addition of 5 ml enzyme solution to each of the individual reaction vessels of the samples and the blank samples which were then shaken for 2 hours at 37 °C (200 rpm).

The reaction was quenched by the addition of 5 ml glacial acetic acid (equilibrated to pH 3.0) and 80 ml technical ethanol to the samples, blank samples and the references.

Precipitation of the water-insoluble linear poly-alpha-1,4-D-glucan from the reaction mixture was achieved by incubation of the quenched reaction assay at room temperature for 1 hour.

After sedimentation (centrifugation for 10 min at 2500 x g) the sediment of the individual assays obtained was washed twice with 80% ethanol to remove short-chain glucans and then freeze dried after cooling to -70 °C.

The samples were re-weighed and the weight differences used for the calculation of the "gravimetric" RS content.

### b) Determination of the RS content

The following procedure was used for the determination of RS content of the individual batches of water-insoluble linear poly-alpha-1,4-D-glucans:
a) Determination of the water content of the individual sample batches of linear poly-alpha-1,4-D-glucans (wt.H₂O)
b) Determination of the tare weight of the individual reaction vessels for the respective samples (wt.RGP), references (wt.RGR) and the blank samples (wt.RGB).
c) Weighing ca. 200 mg of water-insoluble linear poly-alpha-1,4-D-glucan into the individual reaction vessels for samples (wt.P) and references (wt.R)
d) Calculation of the dry fraction of the weights for samples (wt.Pₜᵣ = wt.P - wt.H₂O) and references (wt Rₜᵣ = wt.P - wt.H₂O)
e) Enzymatic digestion of the respective samples and blank samples. References are treated in the same way but without addition of the enzyme solution.
f) Precipitation, sedimentation, washing and freeze drying of the substances remaining in the reaction vessels of the samples, references and blank samples after the treatment described in e).
g) Weighing of the substances remaining in the reaction vessels of the samples (wt.PRG), references (wt.RRG) and blank samples (wt.BRG), inclusive of reaction vessel after the treatment described in f).
h) Calculation of the weight of the substances remaining in the reaction vessels of the
   samples (wt.Pnv = wt.PRG - wt.RGP),
   references (wt.Rnv = wt.RRG - wt.RGR)
   and the blank samples (wt.Bnv = wt.BRG - wt.RGB)
   after the treatment described under f).
i) Determination of the water content of the substances remaining in the reaction vessels of
   samples (wt.H₂OPnv),
   references (wt.H₂ORnv)
   and the blank samples (wt.H₂OBnv)
j) Calculation of the dry fraction of the substances remaining in the reaction vessels of the
   samples (wt.Pnvₜᵣ = wt.Pnv - wt.H₂OPnv)
   references (wt.Rnvₜᵣ = wt.Rnv - wt.H₂ORnv)
   and the blank samples (wt.Bnvₜᵣ = wt.Bnv - H₂OBnv)
   after the treatment described under f).
k) Determination of the corrected weights for the samples (wt.Pnvₖₒᵣᵣ = wt.Pnvₜᵣ - wt.Bnvₜᵣ)
   and references (wt.Rnvₖₒᵣᵣ = wt.Rnvₜᵣ - wt.Bnvₜᵣ)
l) Calculation of the percentage fraction of the corrected weights of the water-insoluble linear poly-alpha-1,4-D-glucans remaining after enzymatic digestion relative to the dry weight of the starting amount of the
   samples (RSaP = wt.Pnvₖₒᵣᵣ/wt.Pₜᵣ 100)
   and calculation of the percentage fraction of the corrected weights of the remaining water-insoluble linear poly-alpha-1,4-D-glucans of the references relative to the dry weight of the starting amounts of the references (RSaR = wt.Rnvₖₒᵣᵣ / wt.Rₜᵣ x 100).
m) Determination of the mean value of the percentage fractions of the water-insoluble linear poly-alpha-1,4-D-glucans remaining after enzymatic digestion of the samples (RSaPMW = n x RSaP / n)
   and determination of the mean values of the percentage fractions of the remaining water-insoluble linear poly-alpha-1,4-D-glucans of the references: (recovery rate; RSaRMW = n x RSaR / n)
   where n is the number of sample and reference assays carried out for the respective batches of water-insoluble linear poly-alpha-1,4-D-glucans.
n) Determination of the percentage RS content of the individual batches of water-insoluble linear poly-alpha-1,4-D-glucans by correction of the mean values of the percentage fractions of the water-insoluble linear poly-alpha-1,4-D-glucans remaining after enzymatic digestion with the recovery rate (RS = RSaPMW / RSaRMW x 100).

### c) RS content of the water-insoluble linear poly-alpha-1,4-D-glucans

The RS content of water-insoluble linear poly-alpha-1,4-D-glucans, prepared by the conversion of saccharose by a protein with the enzymatic activity of an amylosucrase was determined according to the method described under example 2b). If a crude protein extract from *E. coli* bacterial strain DH5α that expresses a nucleic acid sequence coding an amylosucrase from *Neisseria polysaccharea* (Potocki de Montalk et al., 1999, J. of Bacteriology 181, 375 -381) was used for the preparation of the water-insoluble linear poly-alpha-1,4-D-glucan the RS content of the water-insoluble linear poly-alpha-1,4-D-glucan was 75% +/- 2%.

If a crude protein extract of the *E. coli* bacterial strain KV832 (Kiel et al., 1987, Mol. Gen. Genet. 207: 294-301) that expresses a nucleic acid sequence coding an amylosucrase from *Neisseria polysaccharea* (Potocki de Montalk et al., 1999, J. of Bacteriology 181, 375 -381) was used for the preparation of the water-insoluble linear poly-alpha-1,4-D-glucan the RS content of the water-insoluble linear poly-alpha-1,4-D-glucan was 91% b+/- 2%.

### Example 2

### Determination of the molecular weight of water-insoluble linear poly-alpha-1,4-D-glucans

The molecular weight of water-insoluble linear poly-alpha-1,4-D-glucans prepared by the conversion of saccharose by a protein with the enzymatic activity of an amylosucrase was determined by gel permeation chromatography (GPC).

### a) Preparation of the samples for carrying out the GPC

1. Preparation of a 1% solution of the water-insoluble linear poly-alpha-1,4-D-glucan in DMSO+90 mM NaNO₃ (= corresponds to the eluent used in the GPC analysis)
2. Shake for ca. 30 minutes at 60 °C to dissolve
3. Centrifugation for I minute at 8000 rpm on a bench centrifuge
4. 1:10 dilution in the eluent
5. Injection of 24 µl 1:10 dilution

### b) GPC analysis

Components of the GPC system used:
Pump: Dionex, P580
Autosample: Dionex, AS50
Columns: PSS (pre-column: PSS GRAM, 10 µ; separation columns: PSS
GRAM 3000, 10 µ and PSS GRAM 100, 10 µ
column oven: Dionex, model 585
detection: Shodex R171

### The GPC analysis was carried out under the following conditions:

Autosampler and column oven at 60 °C
Eluent: DMSO + 90 mM NaNO₃
Eluent flow rate: 0.7 ml/min

The control was carried out with the software Chromeleon (Dionex) and the evaluation of the data with the help of the software PSS WinGPC compact V.6.20.

### c) Molecular weights of the water-insoluble linear poly-alpha-1,4-D-glucans

The water-insoluble linear poly-alpha-1,4-D-glucans investigated exhibited a molecular weight of 1500 to 55,000 Dalton. The peak maximum lay at 9000 Dalton.

### Example 3

### Determination of the thermal stability of the water-insoluble linear poly-alpha-1,4-D-glucans by means of DSC analysis

The thermal stability of the RS products was determined with the aid of the Pyris Diamond DSC from Perkin Elmer. 10 mg each time of RS products were weighed into a measurement capsule (steel pan Perkin Elmer product no. 03190029), treated with 30 µl deionised water (Millipore) and the measurement capsule was sealed as according to the producer's instructions. All samples were measured within 12 hours. An empty measurement capsule served as reference. Calibration was carried out with an indium standard. The DSC measurement were carried out over a temperature range of 20-150 °C at a heating rate of 10 °C per minute. The determination of T₀, Tₚ and ΔH was carried out with Pyrus software (vers. 5). The data for ΔH relate to the dry weights of the samples which were determined with a heated balance. Each sample was measured twice by this method.

**Table 1: Values determined by DSC analysis for water-insoluble linear poly-alpha-1,4-D-glucans**

| | ***E. coli* DH5α Freeze drying** | ***E. coli* KV832 Freeze drying** | ***E. coli* KV832 Air drying** |
|---|---|---|---|
| T₀ | 78.3 °C | 98.7 °C | 92.7 °C |
| T_{P} | 101.3 °C | 112.3 °C | 114.2 °C |
| ΔH | 12.4 J/g | 23 J/g | 20 J/g |

Water-insoluble linear poly-alpha-1,4-D-glucans were prepared either with a crude protein extract of *E. coli* bacterial strain DH5α that expresses a nucleic acid sequence coding an amylosucrase from *Neisseria polysaccharea* (Potocki de Montalk et al., 1999, J. Bacteriology 181, 375-381) or with a crude protein extract of *E. coli* bacterial strain KV832 (Kiel et al., 1987 Mol. Gen. Genet. 207: 294-301) that expresses a nucleic acid sequence that codes for an amylosucrase from *Neisseria polysaccharea* (Potocki de Montalk et al., 1999, J. Bacteriology 181, 375-381). The water-insoluble linear poly-alpha-1,4-D-glucans obtained were either freeze dried or air dried.

## Claims

1. Use of water-insoluble linear poly-alpha-1,4-D-glucans as resistant starch (RS), **characterized in that**
the poly-alpha-1,4-D-glucans are not retrograded, and
exhibit an RS content determined by the method of Englyst et al. of more than 70 wt.%,
wherein the water-insoluble linear poly-alpha-1,4-D-glucans are obtainable by the reaction of an aqueous saccharose solution with a crude protein extract of E. coli bacterial strain KV832 that expresses a nucleic acid sequence that codes for an amylosucrase from Neisseria polysaccharea.

2. Use according to claim 1, **characterised in that** the water-insoluble linear poly-alpha-1,4-D-glucans exhibit an RS content determined by the method of Englyst et al. of more than 75 wt.%

3. Use according to claim 1, **characterised in that** the water-insoluble linear poly-alpha-1,4-D-glucans exhibit an RS content determined by the method of Englyst et al. of more than 80 wt.%

4. Use according to one of claims 1 to 3 **characterised in that** the water-insoluble linear poly-alpha-1,4-D-glucans exhibit a DSC peak temperature of between 95 °C and 125 °C.

5. Use according to one of claims 1 to 4 **characterised in that** the water-insoluble linear poly-alpha-1,4-D-glucans exhibit a DSC energy of phase transformation dH of 20 J/g - 24 J/g.

6. Use according to one of the claims 1 to 5 **characterised in that** the water-insoluble linear poly-alpha-1,4-D-glucans have a mean molecular weight of 1 x 10² g/mol to 10⁵ g/mol.

7. Use according to one of the claims 1 to 5 **characterised in that** the water-insoluble linear poly-alpha-1,4-D-glucans have a mean molecular weight of 1 x 10³ g/mol to 3 x 10⁴ g/mol.

8. Use according to one of the claims 1 to 5 **characterised in that** the water-insoluble linear poly-alpha-1,4-D-glucans have a mean molecular weight of 2 x 10³ g/mol to 1.2 x 10⁴ g/mol.

9. Method for the preparation of water-insoluble linear poly-alpha-1,4-D-glucans according to claims 1-8 encompassing the following steps:
a) preparation of an aqueous saccharose solution;
b) conversion of the aqueous saccharose solution with a crude protein extract of E. coli bacterial strain KV832 that expresses a nucleic acid sequence that codes for an amylosucrase from Neisseria polysaccharea into water-insoluble linear poly-alpha-1,4-D glucans; and optionally
c) isolation of water-insoluble linear poly-alpha-1,4-D-glucans.

## Patentansprüche

1. Verwendung von wasserunlöslichen linearen Poly-alpha-1,4-D-Glukanen als resistente Stärke (RS),
**dadurch gekennzeichnet, dass**
die Poly-alpha-1,4-D-Glukane nicht retrogradiert sind und einen nach der Methode von Englyst et al. bestimmten RS-Gehalt von mehr als 70 Gew.-% aufweisen,
wobei die wasserunlöslichen linearen Poly-alpha-1,4-D-Glukane durch die Reaktion einer wässrigen Saccharose-Lösung mit einem Proteinrohextrakt des E. coli Bakterienstammes KV832 erhältlich sind, der eine Nukleinsäuresequenz exprimiert, die eine Amylosucrase aus Neisseria Polysaccharea kodiert.

2. Verwendung nach Anspruch 1, **dadurch gekennzeichnet, dass** die wasserunlöslichen linearen Poly-alpha-1,4-D-Glukane einen nach der Methode von Englyst et al. bestimmten RS-Gehalt von mehr als 75 Gew.-% aufweisen.

3. Verwendung nach Anspruch 1, **dadurch gekennzeichnet, dass** die wasserunlöslichen linearen Poly-alpha-1,4-D-Glukane einen nach der Methode von Englyst et al. bestimmten RS-Gehalt von mehr als 80 Gew.-% aufweisen.

4. Verwendung nach einem der Ansprüche 1 bis 3, **dadurch gekennzeichnet, dass** die wasserunlöslichen linearen Poly-alpha-1,4-D-Glukane eine DSC-Peaktemperatur zwischen 95°C und 125°C aufweisen.

5. Verwendung nach einem der Ansprüche 1 bis 4, **dadurch gekennzeichnet, dass** die wasserunlöslichen linearen Poly-alpha-1,4-D-Glukane eine DSC-Phasenumwandlungsenergie dH von 20 J/g - 24 J/g aufweisen.

6. Verwendung nach einem der Ansprüche 1 bis 5, **dadurch gekennzeichnet, dass** die wasserunlöslichen linearen Poly-alpha-1,4-D-Glukane ein mittleres Molekulargewicht von 1 x 10² g/mol bis 10⁵ g/mol aufweisen.

7. Verwendung nach einem der Ansprüche 1 bis 5, **dadurch gekennzeichnet, dass** die wasserunlöslichen linearen Poly-alpha-1,4-D-Glukane ein mittleres Molekulargewicht von 1 x 10³ g/mol bis 3 x 10⁴ g/mol aufweisen.

8. Verwendung nach einem der Ansprüche 1 bis 5, **dadurch gekennzeichnet, dass** die wasserunlöslichen linearen Poly-alpha-1,4-D-Glukane ein mittleres Molekulargewicht von 2 x 10³ g/mol bis 1,2 x 10⁴ g/mol aufweisen.

9. Verfahren zur Herstellung von wasserunlöslichen linearen Poly-alpha-1,4-D-Glukanen nach den Ansprüchen 1-8, das die folgenden Schritte umfasst:
a) die Herstellung einer wässrigen Saccharose-Lösung,
b) die Umsetzung der wässrigen Saccharoselösung mit einem Proteinrohextrakt des E. coli Bakterienstammes KV832, der eine Nukleinsäuresequenz exprimiert, die eine Amylosucrase aus Neisseria Polysaccharea kodiert, zu wasserunlöslichen linearen Poly-alpha-1,4-D-Glukanen, und optional
c) die Isolierung wasserunlöslicher linearer Poly-alpha-1,4-D-Glukane.

## Revendications

1. Utilisation de poly-alpha-1,4-D-glucanes linéaires insolubles dans l'eau, en tant qu'amidon résistant (RS), **caractérisée en ce que** les poly-alpha-1,4-D-glucanes ne sont pas rétrogradés et présentent une teneur en RS, déterminée par la méthode d'Englyst *et al*., supérieure à 70 % en poids, les poly-alpha-1,4-D-glucanes linéaires insolubles dans l'eau pouvant être obtenus par la réaction d'une solution aqueuse de saccharose avec un extrait protéique brut de la souche bactérienne E. coli KV832 qui exprime une séquence d'acides nucléiques qui code pour une amylosaccharase de Neisseria polysaccharea.

2. Utilisation selon la revendication 1,
**caractérisée en ce que** les poly-alpha-1,4-D-glucanes linéaires insolubles dans l'eau présentent une teneur en RS, déterminée par la méthode d'Englyst *et al*., supérieure à 75 % en poids.

3. Utilisation selon la revendication 1,
**caractérisée en ce que** les poly-alpha-1,4-D-glucanes linéaires insolubles dans l'eau présentent une teneur en RS, déterminée par la méthode d'Englyst *et al*., supérieure à 80 % en poids.

4. Utilisation selon l'une des revendications 1 à 3, **caractérisée en ce que** les poly-alpha-1,4-D-glucanes linéaires insolubles dans l'eau présentent une température maximale en ACD comprise entre 95 et 125°C.

5. Utilisation selon l'une des revendications 1 à 4, **caractérisée en ce que** les poly-alpha-1,4-D-glucanes linéaires insolubles dans l'eau présentent une énergie de transformation de phase dH en ACD de 20 à 24 J/g.

6. Utilisation selon l'une des revendications 1 à 5, **caractérisée en ce que** les poly-alpha-1,4-D-glucanes linéaires insolubles dans l'eau ont une masse moléculaire moyenne de 1.10² g/mole à 10⁵ g/mole.

7. Utilisation selon l'une des revendications 1 à 5, **caractérisée en ce que** les poly-alpha-1,4-D-glucanes linéaires insolubles dans l'eau ont une masse moléculaire moyenne de 1.10³ g/mole à 3.10⁴ g/mole.

8. Utilisation selon l'une des revendications 1 à 5, **caractérisée en ce que** les poly-alpha-1,4-D-glucanes linéaires insolubles dans l'eau ont une masse moléculaire moyenne de 2.10³ g/mole à 1,2.10⁴ g/mole.

9. Procédé de préparation de poly-alpha-1,4-D-glucanes linéaires insolubles dans l'eau selon les revendications 1 à 8, comprenant les étapes suivantes :
a) préparation d'une solution aqueuse de saccharose ;
b) conversion de la solution aqueuse de saccharose avec un extrait protéique brut de la souche bactérienne E. coli KV832 qui exprime une séquence d'acide nucléique qui code pour une amylosaccharase de Neisseria polysaccharea, en des poly-alpha-1,4-D-glucanes linéaires insolubles dans l'eau ; et en option
c) l'isolement des poly-alpha-1,4-D-glucanes linéaires insolubles dans l'eau.
